# EUROPÄISCHE PATENTANMELDUNG

(11) **EP 1 184 303 A1**
(43) Veröffentlichungstag der Anmeldung: **06.03.2002**
(21) Anmeldenummer: 00118971.1
(22) Anmeldetag: 01.09.2000
(51) Int. Cl.: B65G 13/10

(54) **Schneller Transporttisch für Platten**

(71) Anmelder: Siempelkamp Handling Systeme GmbH & Co., 82515 Wolfratshausen (DE)
(72) Erfinder:
(74) Vertreter: Szynka, Dirk

(57) **Zusammenfassung**

Die Erfindung bezieht sich auf einen flexiblen und schnellen Transporttisch, der eine Mehrzahl von Rollen aufweist, die antreibbar und lenkbar sind.

## Beschreibung

Die vorliegend beschriebene Erfindung bezieht sich auf einen Transporttisch für plattenartige Transportgüter, die im folgenden einfach als Platten bezeichnet werden. Als plattenartige Transportgüter kommen dabei z.B. OSB-Platten, MDF-Platten und andere Faserplatten, Gipsplatten, Mineraiplatten und ganz allgemein Platten aus Holz, Kunststoff, Metall oder auch Verbundplatten aus verschiedenen der vorstehend genannten beispielhaften Materialien, etwa Sandwichplatten mit Metall und/oder Papierdeckschichten und Schaumfüllungen, in Betracht. Solche Platten können als Bauplatten oder zur Herstellung von Bauplatten für Gebäude, Möbel, Gehäuse und anderes verwendet werden.

Bei der Herstellung und Weiterverarbeitung solcher Platten sind Vorrichtungen notwendig, die die Platten, wobei unter dem Begriff Platten hier auch Plattenstapel zu verstehen sind, transportieren. Dabei kann es sich z.B. um einen Transport von einer zu einer anderen Vorrichtung zur Bearbeitung der Platten handeln. Bei dem Transport können aber auch andere Funktionen eine Rolle spielen. Andere mit dem Plattentransport in Verbindung stehende Funktionen können z.B. sein ein Drehen der Platten um Drehachsen, die senkrecht zur Transportebene liegen, Vereinzeln von zusammenhängend transportierten Platten, die jedoch bereits getrennt sind, z.B. hinter einer Sägevorrichtung, Richtungsänderungen im Transport, Zusammenfügen getrennter Platten, z.B. zu einem Stapelbild aus nebeneinanderliegenden einzelnen Plattenformaten vor dem Abstapeln usw. Diese und andere Funktionen sollen im folgenden mit dem Oberbegriff Transport zusammengefaßt sein.

Als Transporteinrichtungen für Platten sind bereits unterschiedliche Typen bekannt. So existieren Rollenbahnen, bei denen langgestreckte, bahnförmige Tische oder Systeme aneinander anschließender Tische mit jeweils einer Vielzahl parallel ausgerichteter Rollen Verwendung finden, auf denen die Platten abrollen können. Außerdem sind Riemenbahnen bekannt, bei denen die soeben geschilderten Rollentische durch langgestreckte Transportriemen ersetzt sind. Es kann auch Kombinationen geben, z.B. bei konventionellen Winkelstationen, die zur Transportrichtungsänderung um einen bestimmten Winkel, häufig 90°, dienen. Dort können heb- und senkbare Transportriemen in einem Rollentisch vorgesehen sein, wobei die Transportrichtungen der Riemen und der Rollen unter dem Winkel der Winkelstation zueinander liegen. Dann können die Platten beispielsweise über die Rollen in die Winkelstation einlaufen, angehalten werden, durch die hebbaren Riemen von den Rollen abgehoben und daraufhin mit den Riemen in einer durch die Riemen definierten Auslaufrichtung wegtransportiert werden. Es wird auf den einschlägigen Stand der Technik verwiesen.

Der Erfindung liegt das technische Problem zugrunde, eine verbesserte Einrichtung zum Transport von Platten anzugeben. Die Erfindung besteht in einem Transporttisch für Platten, auf dem Platten transportiert werden können, wobei der Transporttisch eine Mehrzahl Rollen aufweist, entlang denen die Platten beim Transport abrollen und die zum Antrieb der Platten antreibbar und in einer jeweiligen Lenkachse, die zu der Transportebene im wesentlichen senkrecht verläuft, lenkbar sind.

Die Grundidee der Erfindung besteht darin, einen Transporttisch zu verwenden, der eine Mehrzahl Rollen aufweist, die nicht nur antreibbar, sondern auch lenkbar sind. Damit besteht die Möglichkeit, Drehungen der Platten um zu der durch den Transporttisch definierten Transportebene senkrechte Drehachsen und/oder Transportrichtungsänderungen mit dem Transporttisch durchzuführen. Durch die Lenkbarkeit der Rollen kann dabei ein übermäßiger Schlupf zwischen den Rollen und den Platten vermieden werden, weil die Rollen entweder durch eine aktive Lenkbewegung Drehungen oder Transportrichtungsänderungen vorgeben oder zumindest durch eine passive Lenkbarkeit diesen folgen. Im Rahmen der Erfindung wäre es also beispielsweise möglich, eine Winkelstation zu realisieren, bei der neben einer Transportrichtungsänderung auch eine Drehung um den selben Winkel auftritt, die Orientierung der Platten relativ zu ihrer Transportrichtung also erhalten bleibt, ohne daß eine aktive Lenkbewegung der Rollen notwendig wäre. Durch eine Definition der Rollengeschwindigkeit im Sinn der unterschiedlichen Bahngeschwindigkeiten der Platten während der einer Schwenkbewegung um ein gedachtes Zentrum entsprechenden Plattenbewegung können die Transportrichtungsänderung und die Drehung der Platte erzeugt werden. In der Bahn außen liegende Rollen müssen also jeweils entsprechend schneller angetrieben werden als in der Bahn weiter innen liegende Rollen, so daß die Platten im Außenbereich schneller bewegt werden als im Innenbereich und damit automatisch die gewünschte Kurvenbahn auftritt.

Bevorzugt ist bei der Erfindung jedoch, daß eine Mehrzahl der Rollen des Transporttisches aktiv lenkbar ist, also die Lenkbewegung aktiv, vorzugsweise motorisch, ansteuerbar ist. Auch eine pneumatische Austeuerung der Lenkbewegung kann vorteilhaft sein.

Bei der Erfindung ist es übrigens nicht unbedingt notwendig, jedoch bevorzugt, daß die Platten beim Transport über die Rollen abrollen und von den Rollen getragen werden, der Rollentransporttisch also, von der gleichzeitigen Lenkbarkeit und Antreibbarkeit der Rollen abgesehen, einer konventionellen Rollentransportbahn ähnlich ist. Es ist genauso denkbar, daß die Platten mit im Transport über ihnen liegenden Rollen in Kontakt stehen, und beispielsweise auf ihrer Unterseite über eine gleitfähige Unterlage rutschen, entweder eine glatte Tischfläche oder beispielsweise einen Luftkissentisch. Es können natürlich auch über und unter den Platten Rollen vorgesehen sein. Unten liegende Rollen haben den Vorteil, daß die Platten von oben frei zugänglich sein können. Es könnte aber z.B. auch vorteilhaft sein, die Rollen über den Platten anzuordnen, wenn beispielsweise zur Vergrößerung des Andrucks der Platten an die Rollen, etwa bei sehr leichten Platten, ein durch ein Gebläse oder einen Lufttisch aufgebauter Luftdruck auf die Platten ausgeübt werden soll. Dann kann es baulich günstiger sein, das Gebläse bzw. den Lufttisch unten anzuordnen.

Vorzugsweise, jedoch nicht notwendigerweise, wird bei dem erfindungsgemäßen Transporttisch auf wesentliche Bewegungen senkrecht zu der Transportebene verzichtet, wie sie beispielsweise bei konventionellen Winkelstationen mit Rollen- und Riemenbahnen unumgänglich sind. Solche Vertikalbewegungen bedeuten einen zusätzlichen mechanischen Aufwand, sind im allgemeinen mit zusätzlicher Geräuschentwicklung verbunden und bilden in der Regel Diskontinuitäten im Bewegungsablauf, verlangsamen also den Transportprozeß. Vor allem bei einem Pulktransport, also bei einem Transport mehrerer nebeneinanderliegender Platten, ist eine erfindungsgemäße Bewegung in einer einzigen Transportebene ohne wesentlich Vertikalbewegungen auch sehr viel plattenschonender.

Im Rahmen der Erfindung ist es durchaus denkbar, die lenk- und antreibbaren Rollen technisch so auszustatten, daß die Lenkbewegungen und/oder Antriebsbewegungen jeweils individuell motorisch erzeugt werden können. Damit ergibt sich ein maximaler Freiheitsgrad im Bewegungsablauf, weil durch entsprechende Auslegung einer Steuerung, vorzugsweise softwaregesteuert, praktisch beliebige Bewegungsabläufe der Platten in der Transportebene erzeugt werden können, und zwar auch in beliebiger Reihenfolge, d.h. für aufeinanderfolgende Platten unterschiedlich.

Bei bestimmten Anwendungen können jedoch auch einfachere Varianten bevorzugt sein. Eine wichtige Vereinfachung besteht beispielsweise darin, die Rollen in Gruppen aus jeweils benachbarten Rollen zu unterteilen, wobei die Gruppen gewissermaßen Flächenfeldern des Transporttisches entsprechen. Dann können Rollen innerhalb einer Gruppe gemeinsam angetrieben und/oder gelenkt werden, also kinematisch synchronisiert sein. Die gemeinsame Lenkung oder der gemeinsame Antrieb müssen dabei nicht notwendigerweise zu einer identischen Antriebs- oder Lenkbewegung der Rollen innerhalb der Gruppe führen. Zunächst ist nur daran gedacht, für die Antriebsbewegung und/oder die motorische Lenkung einen gemeinsamen Antriebsmotor oder jedenfalls eine einheitliche Motoransteuerung zu verwenden, um den Steuerungsaufwand zu begrenzen. Durch mechanische Maßnahmen in der Getriebefolge zwischen den Motoren und den Rollen und/oder durch verschiedene Übersetzungen können natürlich auch feste Unterschiede in den Bewegungen zwischen den Rollen in einer Gruppe vorgesehen sein. Im einfachsten Fall sind allerdings alle Antriebs- bzw. Lenkbewegungen innerhalb einer Gruppe identisch.

Vorzugsweise ist im übrigen für die Rollen in einer Gruppe ein gemeinsames Lenkgetriebe und eine gemeinsame Antriebseinrichtung vorgesehen. Das Lenkgetriebe kann beispielsweise ein Hebelgestänge, einen Riemen oder eine Kette zwischen den Lenkmotor (wobei der Lenkmotor ein Stellorgan im allgemeinsten Sinn bezeichnet) und den Rollen oder eine Kombination daraus aufweisen. Für das Antriebsorgan kommen neben Riemen und Ketten z.B. auch durchgehende Wellen als Bestandteile in Betracht.

Wie bei den Ausführungsbeispielen näher veranschaulicht wird, kann es zur leichten gleichzeitigen Realisierung von Antriebs- und Lenkbewegungen von Vorteil sein, die Rollen jeweils über einen Antriebsriemen oder eine Antriebskette mit dem Antriebsorgan, beispielsweise einer Welle, zu verbinden, wobei der Riemen bzw. die Kette im wesentlichen in der Lenkachsenrichtung langgestreckt verläuft, die Umlenkachsen des Riemens oder der Kette also im wesentlichen in der Lenkachsenrichtung voneinander beabstandet sind. Dann kann die Lenkbewegung der Rolle durch eine Verdrehbewegung innerhalb des Riemens bzw. der Kette aufgefangen werden, ohne das Antriebsorgan mitbewegen zu müssen. Dies ist jedenfalls für den üblicherweise auftretenden Lenkwinkelbereich für maximal +/- 90° ein gangbarer Weg. Denkbar, wenn auch weniger bevorzugt, sind auch Antriebslösungen mit einem Reibrad, über das eine Rolle abrollt.

Der Steuerungsaufwand, insbesondere die Entwicklung von Steuerungsprogrammen bei einer Softwaresteuerung, können dadurch vereinfacht werden, daß die Lenkbewegungen nicht stufenlos erfolgen, sondern zwischen festgelegten Lenkwinkelstufen umgeschaltet wird. Die Ausführungsbeispiele veranschaulichen dies. Bei schnellen Umschaltbewegungen kann dabei ein gewisser Schlupf zwischen den Rollen und den Platten auftreten, der jedoch häufig tolerabel ist, solange er nur kurz andauert. Der Schlupf kann dadurch verringert werden, daß der Umschaltvorgang nicht zu schnell erfolgt, also langsam von der einen zu der anderen Winkelposition umgeschaltet wird, ohne daß dies tatsächlich als von der Steuerung eingestellte kontinuierliche Lenkbewegung bezeichnet werden muß.

Eine weitere Vereinfachungsmöglichkeit besteht darin, daß alle Rollen des Transporttisches mit im wesentlichen konstanter Geschwindigkeit angetrieben werden, die Bewegungen der Platten auf dem Transporttisch also im wesentlichen nur durch die Lenkbewegungen gesteuert werden. Auch hierzu wird auf die Ausführungsbeispiele verwiesen. Dieser Erfindungsaspekt ist von Bedeutung sowohl mit der beschriebenen stufenweisen Lenkung als auch mit kontinuierlichen Lenkbewegungen. Es wird an das zuvor bereits erläuterte Beispiel erinnert, eine Schwenkbewegung der Platten durch an die Bahngeschwindigkeiten angepaßte Rollenantriebsgeschwindigkeiten bei passiver Rollenlenkung zu erzeugen. Auch hier kommen konstante Rollengeschwindigkeiten in Betracht. Das Beispiel verdeutlicht auch, daß die im wesentlichen konstanten Rollengeschwindigkeiten nicht für alle Rollen identisch sein müssen.

Beispielhafte Anwendungsmöglichkeiten der Erfindung bestehen in einer Plattenweiche, einer Drehvorrichtung für Platten und einer Winkelstation. Bei der Weiche werden die Platten zwischen Transportbahnen verteilt, wobei zumindest an der Einlaufseite oder der Auslaufseite der Weiche mehr als eine Bahn vorgesehen sein muß. Es können also beispielsweise Platten aus einer Einlaufbahn auf zumindest zwei Bahnen und/oder Bearbeitungsvorrichtungen verteilt werden. Denkbar ist konkret eine Weiche, die die Platten alternierend auf zwei Kühlwender verteilt, in denen die Platten nach einem der Weiche vorhergehenden Warmbearbeitungsschritt auskühlen können. Durch zwei oder mehr Kühlwender kann die Kühlkapazität einer ansonsten schnellen und leistungsfähigen Anlage erhöht werden. Zusätzlich kann beispielsweise eine dritte Auslaufrichtung der Weiche gegeben sein. über die Ausschuß ausgesteuert wird. Es ist jedoch auch denkbar, von zumindest zwei Produktionsanlagen erzeugte Platten über eine Weiche einer gemeinsamen Transportbahn zur Weiterverarbeitung zuzuführen.

Eine Drehvorrichtung kann z.B. wichtig sein, wenn die einzelnen Plattenformate innerhalb einer aufgeteilten großen Platte hinter einer Sägevorrichtung so orientiert werden müssen, daß alle Plattenformate mit ihrer Längsrichtung einheitlich orientiert sind. Dann müssen beispielsweise alle im Schnittplan querliegenden Plattenformate um 90° gedreht werden. Mit einem erfindungsgemäßen Transporttisch ist dies leicht zu realisieren, und zwar angepaßt an die einlaufende Reihenfolge der Plattenformate. Dabei kann die Drehung übrigens mit einer Transportrichtungsänderung kombiniert werden, die Drehvorrichtung also gleichzeitig Winkelstation sein. Hier ist übrigens klarzustellen, daß bei den Drehbewegungen von Platten auf oder in einem erfindungsgemäßen Transporttisch keine räumlich feststehende Drehachse vorliegen muß. Im allgemeinen wird sich die Drehachse mit dem Plattentransport mitbewegen. Es ist auch nicht notwendig, daß die Drehachse relativ zu der Platte feststehend ist. Mit Drehbewegung ist lediglich gemeint, daß die Orientierung der Platten relativ zu einem raumfesten Koordinatensystem verändert wird.

Die vorstehende Funktion der Weiche kann übrigens auch für eine Vereinzelungsvorrichtung genutzt werden. Dabei kann ein noch zusammenhängender Pulk einzelner Plattenformate aufgetrennt werden, indem Rollen des Transporttisches im Bereich der einzelnen Plattenformate für die einzelnen Plattenformate unterschiedliche Bewegungen erzeugen, die die Plattenformate auseinander führen, beispielsweise in eine hintereinander liegende Reihe bringen, dabei auch Drehungen durchführen können usw. Natürlich kann diese Funktion auch mit der beschriebenen Weichenfunktion der Aufteilung auf zwei oder mehr Transportstränge oder mit einer Winkelstationsfunktion, also einer Transportrichtungsänderung, verbunden sein. Für die Vereinzelungsvorrichtung bietet sich die leistungsfähigste Variante der Erfindung an, bei der jede Rolle individuell gesteuert antreibbar und lenkbar ist.

Im folgenden wird eine Winkelstation näher betrachtet, wobei die folgenden Aspekte der Erfindung sinngemäß auch auf die anderen beschriebenen Funktionen übertragbar sind. Zunächst ist erfindungsgemäß bevorzugt, den Plattentransport in einer ununterbrochenen Bewegung zu gestalten, also keine Stillstandsphasen zuzulassen. Eine Drehung einer Platte um eine raumfeste Drehachse gilt hierbei nicht als Stillstand. Mit diesem Merkmal wird das erfindungsgemäße Konzept gerade im Unterschied zu konventionellen Winkelstationen, bei denen ein Stillstand der Transportbewegung in der Umschaltphase zwischen der Rollenbahn und der Riementransportbahn unumgänglich ist, optimal ausgenutzt. Diese Stillstandsphasen führen konventionellerweise dazu, daß Winkelstationen in Anbetracht der Taktzeiten in größeren Plattenverarbeitungsanlagen zunehmend als Flaschenhals zu betrachten sind. Plattenpressen bieten in jüngster Zeit vor allem bei dünnen Platten sehr hohe Ausstoßraten. Auch Schleifstationen und Sägeaggregate erzielen zunehmend einen Durchsatz, der die für Transportrichtungsänderungen, häufig aufgrund baulicher Randbedingungen, unumgänglichen Winkelstationen zu begrenzenden Elementen für den Gesamtdurchsatz der Anlage machen. An dieser Stelle sind Verbesserungen daher von großem Vorteil, weil die wirtschaftliche Bedeutung im Bezug auf die gesamte Plattenverarbeitungsanlage betrachtet werden muß.

Bei solchen Winkelstationen bleibt die Orientierung der Platte bei der Transportrichtungsänderung in der Regel unverändert. Dies ist zu Gunsten einer einfachen Steuerung auch anzustreben, insbesondere sind die minimalen Zwischenabstände zwischen einlaufenden Platten bei parallel zueinander verbleibenden Vorder- und Hinterkanten auch geringer, so daß die Winkelstation insgesamt schneller arbeiten kann.

Eine bevorzugte Abfolge von Umschaltvorgängen zwischen festen Lenkwinkelpositionen bei in Gruppen aufgeteilten Rollen besteht darin, daß bei Einlauf einer ersten Platte in einen Transportbereich des Transporttisches in einer Einlaufbahn liegende Rollen vor Ankunft der ersten Platte in die Einlaufrichtung gelenkt sind, nach Durchlaufen einer Kontrollposition am Anfang des Transportbereichs durch eine Hinterkante der ersten Platte die in der Einlaufbahn liegenden und die außerhalb der ersten Platte und einer Auslaufrichtung der Winkelstation entsprechend vorderen Seitenkante der ersten Platte benachbarten Rollen auf eine erste feste Winkelposition umgelenkt werden, und Rollen in der Einlaufbahn in Gruppen von im Sinn der Einlaufbewegung nebeneinanderliegende Rollen in die Einlaufrichtung zurückgelenkt werden, und zwar zwischen Freigabe durch die Hinterkante der ersten Platte und Eintreffen einer Vorderkante einer nachfolgenden zweiten Platte. Hierzu wird auf die Ausführungsbeispiele verwiesen. Optionalerweise können zudem nach Verlassen der Einlaufbahn durch eine der Auslaufrichtung entsprechend hintere Seitenkante der ersten Platte die von der ersten Platte erfaßten Rollen und der vorderen Seitenkante der ersten Platte benachbarte, jedoch noch nicht von der ersten Platte erfaßte Rollen auf eine zweite feste Winkelposition umgelenkt werden. Auch dies ist in den Ausführungsbeispielen näher dargestellt.

Bei den obenstehenden Lenkwinkelsteuerungen kann die Antriebsgeschwindigkeit der Rollen konstant gehalten werden. Geht man von einer Winkelstation aus, bei der eine Gesamttransportrichtungsänderung von 90° erzielt wird, was ein üblicher Wert ist, so kann die erste Lenkwinkelposition unter 45° zur Einlaufrichtung liegen und die zweite Lenkwinkelposition bereits die Auslaufrichtung vorgeben, also unter 90° zur Einlaufrichtung liegen. Natürlich ist es auch möglich, den 90°-Winkel zwischen Einlaufrichtung und Auslaufrichtung in mehr als zwei Teile zu unterteilen, also eine erste feste Winkelposition beispielsweise bei 30° vorzusehen, eine zweite bei 60° und, analog zu der oben beschriebenen Umschaltung zwischen der ersten und der zweiten Winkelposition, von der zweiten auf eine dritte Winkelposition umzuschalten, die dann der Auslaufrichtung entspricht. Entsprechendes gilt für noch feinere Unterteilungen.

Die Ausführungsbeispiele zeigen weiterhin auch eine konkretere Realisierungsform für Rollen mit individuellem Transportantrieb und Lenkantrieb. Dabei wird eine Ausführungsform der Erfindung veranschaulicht, bei der die Rollen auf der Abtriebsachse ihres zugeordneten Antriebsmotors montiert sind und der Antriebsmotor wiederum auf der Abtriebsachse eines der Rolle zugeordneten Lenkmotors montiert ist. Der Lenkmotor bewegt also den Transportantriebsmotor mit dessen Antriebsachse und der Rolle. Wenn dabei die Lenkachse nicht mittig durch die Rolle verläuft, wie bei dem weiter unten erläuterten Ausführungsbeispiel, so müssen Lenkbewegungen in den Transportantriebsbewegungen berücksichtigt werden. Diese Lösung kann mechanisch einfacher sein und benötigt einen etwas erhöhten Aufwand in der Ansteuerung. Es ist jedoch genauso gut möglich, die Montage der Rolle und des Transportantriebsmotors auf der Antriebsachse des Lenkmotors so vorzunehmen, daß die Lenkachse zentrisch durch die Rolle verläuft. Als Antriebsmotor kommt vorzugsweise ein drehzahlgeregelter Elektromotor in Frage, als Lenkmotor vorzugsweise ein elektrischer Schrittmotor.

Der erfindungsgemäße Transporttisch soll Platten in ihrer Transportrichtung und/oder Bewegungsrichtung beeinflussen. Es treten also Beschleunigungen und Verzögerungen auf. Da die Erfindung insbesondere darauf abzielt, besonders schnell arbeitende Transporttische zur Verfügung zu stellen, können diese Beschleunigung (wobei im folgenden Verzögerungen inbegriffen sind) erhebliche Werte annehmen. Um eine ausreichende Kontrolle der Plattenbewegung sicherzustellen, ist dabei nur ein relativ begrenzter Schlupf tolerabel, der nach relativ kurzer Zeit, z.B. nach einem ruckartigen Richtungswechsel oder Transportgeschwindigkeitswechsel, wieder verschwindet.

Bei bestimmten Plattentypen kann es auch besonders bedeutsam sein, Schlupf möglichst ganz zu vermeiden. Zum einen kann dies dadurch geschehen, daß die Rollreibung zwischen den Rollen und den Platten erhöht wird, also durch nicht zu schmale Rollenlaufflächen, geeignete Materialien der Rollenlaufflächen usw. Außerdem kann, wie bereits erwänt, die Andruckkraft zwischen Platten und Rollen eine Rolle spielen, die z.B. durch Luftdruck auf der entgegengesetzten Plattenseite oder Ansaugen der Platte von der Seite der Rollen aus erhöht werden kann. Dies ist besonders dann relevant, wenn die Platten so leicht sind, daß ihr Gewicht nicht zum Aufdruck auf unter ihnen liegende Rollen ausreicht.

Auch kann es von Interesse sein, die Geschwindigkeit des Transporttisches bei bestimmten Bewegungsabläufen zu optimieren und dabei bestimmte Beschleunigungswerte nicht zu überschreiten, von denen sichergestellt ist, daß sie schlupffrei bzw. mit tolerablem Schlupf übertragbar sind. Daher ist es bei einer erfindungsgemäßen Variante bevorzugt, die Beschleunigungen auf bestimmte Maximalwerte zu begrenzen und auf diesen Maximalwerten für bestimmte Zeitperioden zu belassen. Die Bewegungsabläufe können also in anderen Worten so optimiert werden, daß sich in den kritischen Bewegungsphasen zeitlich konstante Beschleunigungen ergeben, so daß insgesamt im Rahmen der zur Verfügung stehenden Rollreibungskopplung eine maximal schnelle Bewegungsänderung auftritt. Bei einer Winkelstation mit einem 90°-Winkel der Transportrichtungsänderung kann dies beispielsweise konkret bedeuten, daß die Bewegung in der Einlaufrichtung innerhalb der Winkelstation konstant verzögert wird und die Bewegung in der Auslaufrichtung mit konstanter Beschleunigung aufgebaut wird, die Geschwindigkeits-Zeit-Verläufe in diesen Richtungskomponenten also linear sind und die Orts-Zeit-Zusammenhänge in den Richtungskomponenten also Parabelabschnitte darstellen. Mathematisch ergibt sich dabei allerdings keine konstante Rollengeschwindigkeit, so daß im Idealfall nicht nur die Lenkbewegung der Rollen, sondern auch der Transportantrieb der Rollen entsprechend angepaßt werden muß. Es kann von Interesse sein, solche beschleunigungsoptimierten Bewegungsbahnen im Rahmen einer vereinfachten Steuerung anzunähern. Dabei kommt beispielsweise für die Winkelstation ein Kreisbahnstück als Bewegungsbahn in Betracht, bei einer 90°-Winkelstation also ein Viertelkreis. Dieses Kreisbandstück kann dann mit praktisch konstanter Bahngeschwindigkeit durchlaufen werden, wobei sich für die Orts-/Zeitkurven in den beiden Richtungskomponenten keine Parabelstücke, sondern dem Winkel der Winkelstation entsprechende Ausschnitte aus Sinus- bzw. Kosinuskurven ergeben. Diese Sinus- oder Kosinuskurven sind jedoch den zuvor erläuterten Parabelstücken angenähert, so daß sich in dieser Bahn beispielsweise eine beschleunigungsgünstige Bewegung mit begrenztem Steuerungsaufwand ergibt. Insbesondere kann auch die Lenkbewegung der Rollen als Kreisbahnstück, z.B. aus einer konstanten Antriebsgeschwindigkeit eines Lenkmotors leicht mechanisch erzeugt werden.

Im folgenden werden Ausführungsbeispiele der Erfindung erläutert, die die obenstehende Beschreibung veranschaulichen. Dabei offenbarte Einzelmerkmale können auch in anderen als in dargestellten Kombinationen erfindungswesentlich sein. Insbesondere wird darauf hingewiesen, daß die vorstehende und folgende Beschreibung auch im Hinblick auf den Verfahrenscharakter der technischen Offenbarung zu verstehen ist, die Aufstellung von Verfahrensansprüchen also vorbehalten bleibt.

Im einzelnen zeigt:
Fig. 1 eine Draufsicht auf einen Teil einer Produktionsanlage für Platten, in der ein erfindungsgemäßer Transporttisch inbegriffen ist;
Fig. 2 eine schematisierte Draufsicht auf den Transporttisch aus Fig. 1;
Fig. 3 eine in Transportrichtung gesehene Seitenansicht einer Rolle des Transporttisches aus den Fig. 1 und 2 mit einem Teil der Antriebs- und Lenkmechanik;
Fig. 4 eine im rechten Winkel zu Fig. 3 gesehene Seitenansicht der selben Rolle;
Fig. 5 eine Draufsicht auf die Rolle aus den Fig. 3 und 4;
Fig. 6 eine in Transportrichtung gesehene Seitenansicht einer alternativen Ausführungsform einer Rolle;
Fig. 7 eine Draufsicht auf die Rolle aus Fig. 6.

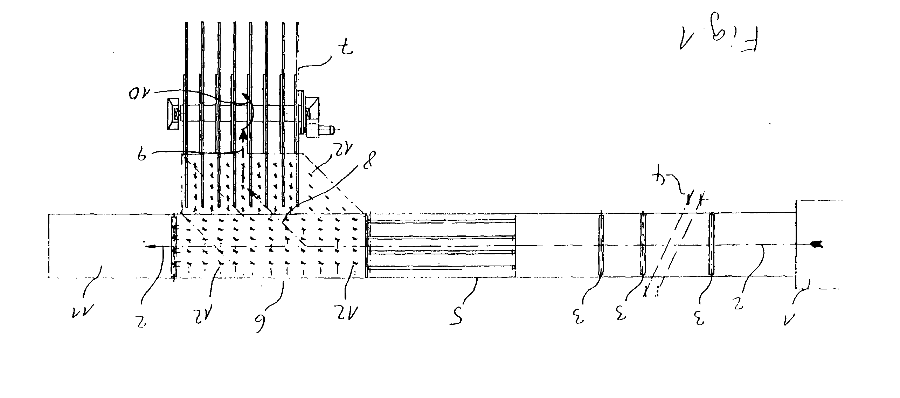

Fig. 1 zeigt einen Teil einer Produktionsanlage zur Herstellung von Preßplatten (z.B. Span-/MDF-Platten). Die Preßplatten werden in einem endlosen Strang in einer Presse 1 erzeugt, indem unter Druck und Erwärmung gestreute Span- oder Holzfaserkuchen zusammengepreßt werden. Der Pfeil 2 verdeutlicht die Richtung des Auslaufs des endlosen Plattenstrangs, der selbst nicht dargestellt ist, aus der Presse 1. Der Plattenstrang läuft über eine Walzentransportbahn weiter, von der symbolisch drei Walzen 3 dargestellt sind, wird durch ein mitlaufendes Kreissägenaggregat 4 in der Transportbewegung in einzelne Platten zerteilt und in dieser Form einer Waage 5 zugeführt. Dort werden die einzelnen Platten 5 gewogen, und zwar im ununterbrochenen Transport in Richtung des Pfeils 2. Der bis hier geschilderte Teil der Produktionsanlage ist an sich Stand der Technik und muß nicht näher erläutert werden. Er bildet auch nur ein besonderes von vielen denkbaren Anwendungsbeispielen für den erfindungsgemäßen Transporttisch. Dieser Transporttisch 6 schließt sich wiederum in der durch den Pfeil 2 dargestellten Richtung an die Waage 5 an; der Pfeil 2 bezeichnet also die Einlaufrichtung der Platten in den Transporttisch 6.

Der Transporttisch 6 hat bei diesem Beispiel eine Kombinationsfunktion: zum einen dient er als Winkelstation zur Änderung der Transportrichtung der Platten um 90° und Zuführen der durch die Winkelstation 6 durchgelaufenen Platten zu einem Drehkühlwender 7. Auch der Drehkühlwender ist an sich Stand der Technik und muß hier nicht genau erläutert werden. Er hat die Funktion, die einzelnen noch warmen Platten vor der Weiterverarbeitung in Fächern aufzunehmen, in denen sie während einer 180°-Drehung in dem Drehkühlwender 7 auskühlen können. Der Drehkühlwender 7 stellt sich seitlich betrachtet, also in der Blickrichtung des Pfeils 2, sternförmig dar, wobei die Fächer für die einzelnen Platten sozusagen zwischen den Strahlen des Sterns gebildet sind.

Der Pfeil 8 veranschaulicht, daß die Platten innerhalb der Winkelstation 6 unter 45° zur Einlaufrichtung 2 transportiert werden, während der Pfeil 9 veranschaulicht, daß sich an den Transport in der Richtung 8 ein weiterer Bewegungsteil unter 90° zur Einlaufrichtung 2 anschließt, nämlich in der durch den Pfeil 9 gegebenen Auslaufrichtung. In dieser Richtung werden die Platten in den Drehkühlwender 7 eingelegt, dessen Drehung durch den Pfeil 10 versinnbildlicht ist.

Gleichzeitig dient der Transporttisch 6 als Weiche, indem er Ausschuß in der ursprünglichen Einlaufrichtung 2 weiterbefördert und einem mit 11 bezeichneten Ausschußplatz zuführt.

Eine erweiterte Ausführungsform, die hier nicht näher zeichnerisch dargestellt ist, verfügt über eine in Fig. 1 nach oben gerichtete Auslaufrichtung zu einem zweiten Kühlsternwender. Dazu muß man sich in Fig. 1 eine Spiegelung an der durch den Pfeil 2 gebildeten Achse vorstellen. Es ergibt sich somit eine 1:3-Weiche, die, in Richtung des Pfeils 2 gesehen, nach links und rechts jeweils zu einem Kühlsternwender führt und geradeaus zu dem Ausschußplatz 11. Grundsätzliche Abweichungen von der im folgenden dargestellten Funktionsweise des Transporttisches 6 bestehen nicht, die Funktionen der in Fig. 1 nach oben gerichteten Winkelstation ergibt sich jeweils durch Spiegelung an der durch den Pfeil 2 gegebenen Achse. Dabei sind auch andere Winkel der Bewegungsrichtungsänderung als 90° realisierbar.

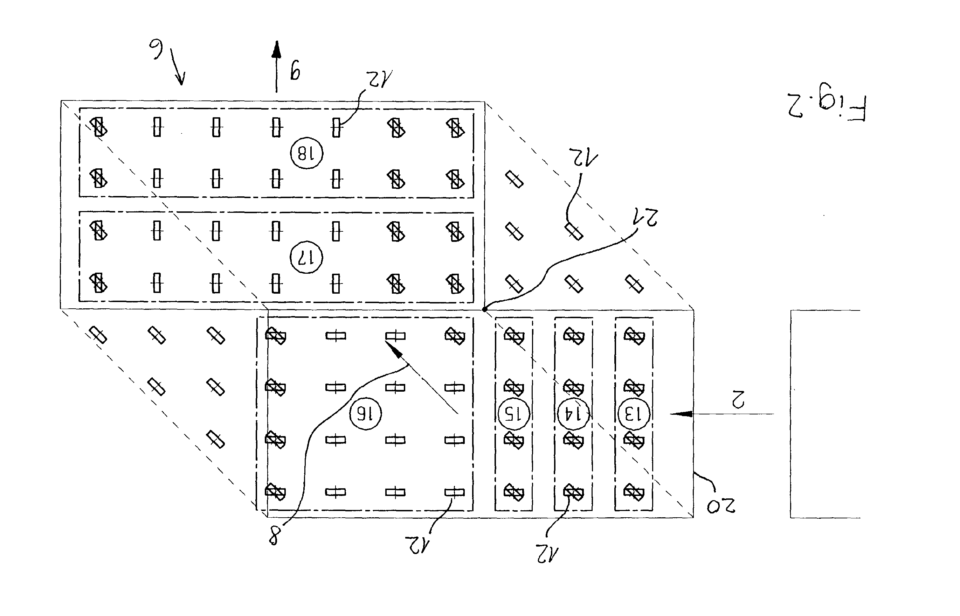

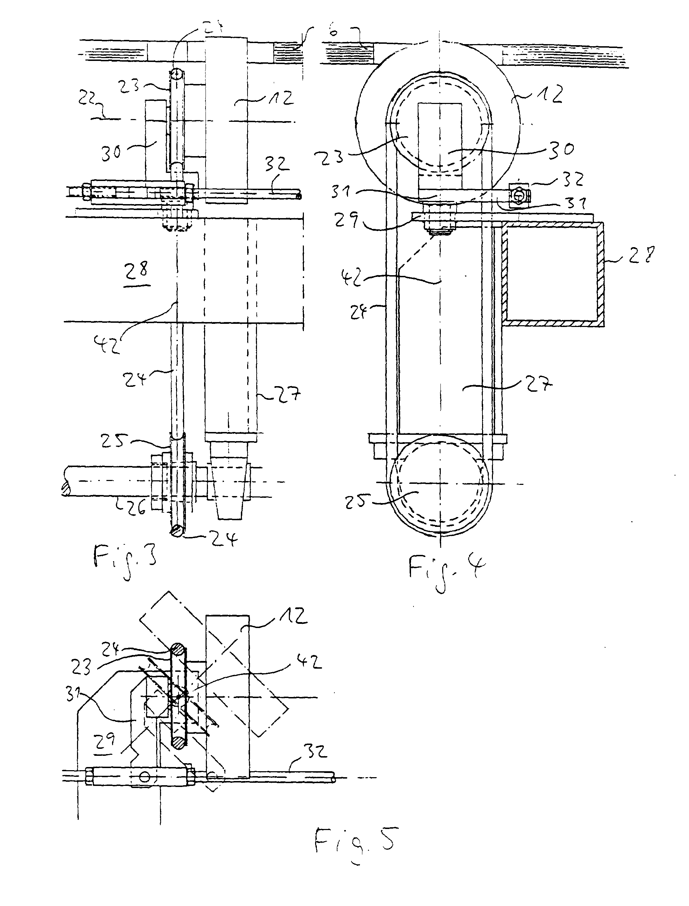

Die Fig. 1 und 2 verdeutlichen gemeinsam, daß der Transporttisch 6 aus einem Feld mit einer Vielzahl einzelner Rollen 12 besteht. Die Rollen 12 sind in Gruppen 13 - 18 aufgeteilt, die in Fig. 2 jeweils von kräftigen Linien mit Strichelung umschlossen sind. Diese Linien dienen nur der Veranschaulichung der Gruppenzugehörigkeit und haben keinen weiteren technischen Hintergrund. Die im linken unteren und rechten oberen Bereich eingezeichneten jeweils sechs Rollen sind nicht aktiv lenkbar und somit keiner Gruppe zugeordnet. Fig. 2 verdeutlicht, daß die Rollen 12 in den Gruppen 13 - 16 von einer der Einlaufrichtung 2 entsprechenden Winkelposition in eine unter 45° dazu liegende Winkelposition in Richtung des Pfeils 8 umgeschaltet werden können, während die Rollen 12 in den Gruppen 17 und 18 von einer in Richtung des Pfeils 8 liegenden Winkelposition in eine in die Auslaufrichtung 9 liegende Winkelposition umgeschaltet werden können. Die nicht lenkbaren Rollen liegen in der Richtung 8. Alle Rollen 12 werden mit konstanter Geschwindigkeit angetrieben, wozu auf die Figuren 3-5 und die dazu folgende Beschreibung verwiesen wird; die nicht lenkbaren Rollen müssen nicht unbedingt angetrieben sein. Dies verbessert jedoch den Betrieb insbesondere bei kurzen Platten.

Dabei ist in Fig. 2 nur der für eine Winkelstation vorgesehene Teil dargestellt. Bei einer Weiche muß die Gruppe 16 breiter sein (vgl. Fig. 1).

Wenn eine Platte in Richtung des Pfeils 2 aus der Waage 5 in den Transporttisch 6 einfährt, stehen die Rollen in den Gruppen 13 - 16 in der Richtung 2. Die Platte fährt ein, bis ihre Hinterkante die mit 20 bezeichnete Referenzposition, also die Eintrittskante des Transporttisches 6, erreicht. Dies wird z.B. durch eine Lichtschranke detektiert. Dann schalten die Rollen in den Gruppen 13 - 16 zusammen in die Richtung 8 um, so daß sich die Platte in Richtung des Pfeils 8 bewegt. Dieser Übergang kann durch entsprechende Auslegung des noch näher erläuterten Lenkantriebes so weich erfolgen, daß kein nennenswerter Schlupf auftritt. Die Platte wird nun in der Richtung 8 weitertransportiert, wobei die Hinterkante über die nicht lenkbaren Rollen fährt. Wenn die Lenkbewegung eher kontinuierlich erfolgt, kann es sinnvoll sein, die zwölf Rollen im linken unteren und im rechten oberen Bereich entweder passiv lenkbar auszuführen oder den Gruppen 16, 17 und 18 zuzuordnen.

Die Gruppen 13, 14 und 15 schalten in die Richtung des Pfeils 2 zurück, sobald sie von der Platte freigegeben sind, also der Reihe nach. Da die Plattentransportgeschwindigkeit bekannt ist, kann dies abhängig von dem Signal der Hinterkante an der Festkante 20 ausgelöst werden. Da die Steuerung von der Hinterkante der Platte ausgeht, ist hierbei die Plattenlänge gleichgültig. Bei veränderlichen Plattenbreiten, wird auf die in Richtung des Pfeils 2 gesehen rechte Kante der Einlauftransportbahn 3 als Festkante gesteuert.

Abweichend von dem beschriebenen Ausführungsbeispiel läßt sich die Erfindung aber auch mit einer an der Vorderkante orientierten Steuerung realisieren.

Die Rollengruppen 17 und 18 stehen, jeweils bevor sie erreicht werden, in der dem Pfeil 8 entsprechenden Stellung. Wenn die Platte die Grenze zwischen den Rollengruppen 16 und 17 überschritten hat, schaltet auch die Rollengruppe 16 in die Richtung 2 zurück.

Wenn die Platte mit der seitlich hinteren Kante, also im Sinn des Pfeils 2 linken Kante, die Grenze zwischen den Rollengruppen 16 und 17 überschritten hat, schalten die Rollengruppen 17 und 18 in die Richtung des Pfeils 9, um die Platte in dieser Richtung in den Kühlsternwender 7 einzufahren.

Eine nachfolgende Platte kann der soeben betrachteten Platte in relativ kurzem Abstand folgen, wobei der Abstand abhängig von den maximal auftretenden Plattenlängen so optimiert werden muß, daß die im Sinn der Figur 2 rechte untere Ecke der nachfolgenden Platte und linke obere Ecke der vorausgehenden Platte dann gerade aneinander vorbeilaufen, ohne sich zu berühren, wenn die vorauslaufende Platte die Grenze zwischen den Rollengruppen 16 und 17 überschreitet und die nachfolgende Platte die Grenze zwischen den Rollengruppen 15 und 16. Dieser für die Abstandsminimierung zwischen den Platten kritische Punkt ist mit 21 bezeichnet. Die Rollengruppen 13, 14 und 15 schalten nach Durchlauf der Hinterkante der vorauslaufenden Platte sofort wieder in die Richtung 2 zurück, so daß die nachfolgende Platte die Rollen in der richtigen Richtung vorfindet. Entsprechendes gilt für die Rollengruppe 16 nach Durchlauf der im Sinn der Figur 2 oberen Kante der Platte, also der im Sinn der Winkelstation seitlich hinteren Kante, über die Grenze zwischen den Rollengruppen 16 und 17.

Das maximale Plattenformat entspricht dem Format der Rollengruppe 16 bzw. dem Format der zusammengenommenen Rollengruppen 17 und 18. Bei dem in Fig. 2 dargestellten Plattenformat ist es übrigens nicht notwendig, die Rollengruppen 17 und 18 zu trennen; hier könnte vielmehr eine einzige Rollengruppe vorgesehen sein, die auf die Richtung 8 zurückschaltet, sobald die Platte die in Fig. 2 untere Grenze dieser Rollengruppe verlassen hat.

Je nach Verhältnis der maximalen Länge zur maximalen Breite der Platten kann es jedoch vorkommen, daß die nachlaufende Platte die Grenze zwischen den Rollengruppen 16 und 17 bereits überschritten hat, wenn die vorauslaufende Platte die Rollengruppe 18 noch nicht vollständig verlassen hat. In solchen Fällen ist die hier gezeichnete Aufteilung sinnvoll, weil dann die Rollengruppe 17 früher in die Richtung 8 zurückgeschaltet werden kann. Es ist natürlich auch denkbar, eine Unterteilung in mehr als zwei Rollengruppen in diesem Bereich vorzunehmen. Aus dem geschilderten Grundprinzip ergeben sich solche und andere Rollengruppenaufteilungen zwanglos.

Es versteht sich außerdem, daß bei Ausschuß, z.B. durch einen von Beaufsichtigungspersonal ausgelöstes Signal oder infolge einer Signalisierung durch eine Qualitätsüberwachungseinrichtung, die Rollengruppen 13 - 16 in der Richtung 2 verbleiben, um die Ausschußplatte zu dem Ausschußplatz 11 auszuschleusen.

Im übrigen ist auch klar, daß bei der bereits erwähnten Variante mit einer in Fig. 2 nach oben gerichteten Auslaufrichtung des Transporttisches 6 eine Spiegelung der Gruppeneinteilung an der durch den Pfeil 2 symbolisierten Achse vorzunehmen ist, also die in Fig. 2 untere Hälfte des Transporttisches 6 oben noch einmal spiegelbildlich angefügt wird, wobei die Rollen in den Gruppen 13-16 dann zwischen drei Winkelpositionen umgeschaltet werden können müssen, nämlich -45°, 0° und +45°, in Bezug auf die Richtung 2. Die Umlenkung der Platten in die im Sinn des Pfeils rechte und linke Auslaufrichtung könnte dann entweder alternierend erfolgen oder auch nach komplizierteren situationsangepaßten Steuerungsschemata.

Bei diesem Ausführungsbeispiel wird also demonstriert, wie das erfindungsgemäße Transporttischkonzept eine Winkelstation und Schleuse gleichzeitig bilden kann, wobei die Platten stillstandsfrei bei konstanter Geschwindigkeit transportiert werden. Der einfacheren Steuerung halber wird zwischen festen Winkelpositionen umgeschaltet. Hauptsächlich durch die Vermeidung des bei konventionellen Winkelstationen notwendigen Stillstands und die dadurch ermöglichte dichtere Aufeinanderfolge der einzelnen Platten kann in dieser Weise eine erhebliche Geschwindigkeitssteigerung in der Winkelstation 6 erzielt werden.

Im Vergleich zu konventionellen Winkelstationen ergibt sich jedoch ein erhöhter Platzbedarf, und zwar bei dieser Ausführungsform um die maximale Plattenbreite in der Länge und in der Breite.

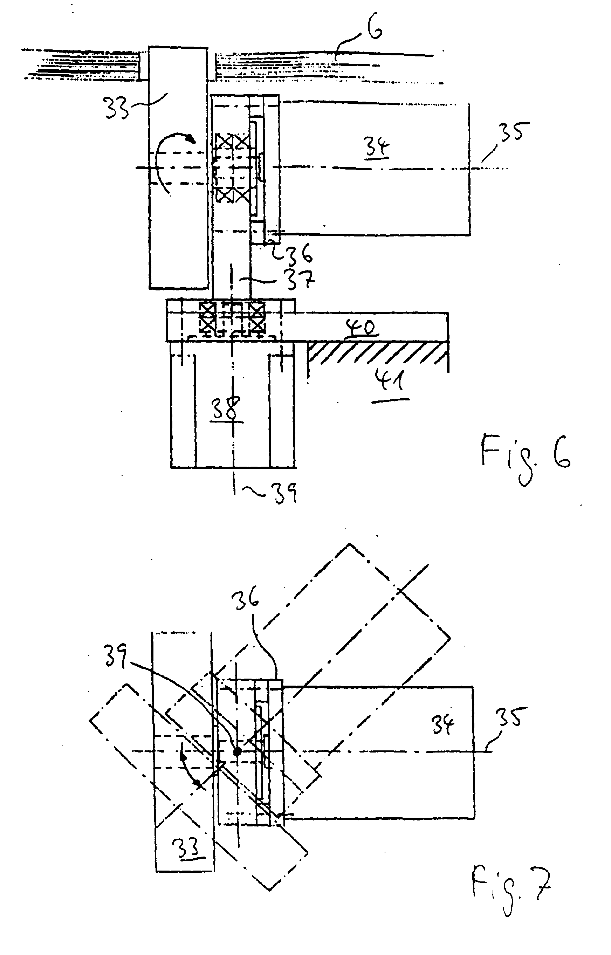

Die Fig. 3 - 5 zeigen in zwei Seitenansichten und einer Draufsicht den Aufbau der Antriebs- und Lenkmechanik der Rollen 12 des Transporttisches 6 aus den Figuren 1 und 2. Die Oberfläche des Transporttisches ist in den Fig. 3 und 4 mit 6 bezeichnet. Man erkennt, daß die Rollen 12 geringfügig über die Oberfläche 6 hinausragen und damit die Platten schwebend über der Oberfläche des Tisches 6 halten.

Die Rolle 12 ist an einer mit 22 symbolisierten Achse drehbar gehalten. Neben der eigentlichen Rolle 12 liegt auf dieser Achse eine Antriebsriemenscheibe 23, auf der ein Antriebsriemen 24 abläuft. Der Antriebsriemen 24 verbindet die Antriebsriemenscheibe 23 mit einer Abtriebsriemenscheibe 25, die auf einer durchgehenden Antriebsriemenwelle 26 und senkrecht zu der Ebene des Transporttisches 6 unter der Antriebsriemenscheibe 23 sitzt. Die Antriebsriemenwelle 26 verbindet die Abtriebsriemenscheiben für nebeneinanderliegende Rollen 12 in jeweiligen Gruppen, also beispielsweise jeweils alle Rollen 12 in den Gruppen 13, 14 und 15. Es versteht sich, daß für die Gruppe 16 sechs Abtriebswellen 26 notwendig sind und für die Gruppen 17 und 18 jeweils zwei. Die Abtriebswellen können über weitere Riemen, Ketten oder ein Zahnradgetriebe untereinander verbunden sein. Bei diesem Ausführungsbeispiel besteht dabei auch keine Einschränkung auf die Gruppen, weil ohnehin alle Rollen mit gleicher Geschwindigkeit angetrieben werden. Als Antrieb dient ein drehzahlgeregelter Elektromotor.

Die Abtriebswelle 26 ist im übrigen in konventioneller Weise an einem Träger 27 drehbar gehalten, der sich von einem Querbalken 28 aus nach unten erstreckt. An dem Querbalken 28 ist ein weiterer Träger 29 befestigt, an dem ein die Drehachse 22 des Rades 12 und der Antriebsriemenscheibe 23 tragender Achsenhalter 30 um eine Lenkachse 42 drehbar gehalten ist. Der Achsenhalter 30 wird dabei über einen Lenkhebel 31, der von einem Gestänge 32 geschwenkt wird, bewegt, woraus die Lenkbewegung des Rades 12 folgt. Auch die jeweils von einem Schrittmotor erledigte Bewegung des Lenkgestänges 32 erfolgt für Rollen innerhalb einer Gruppe gemeinsam, wobei in den Gruppen 16, 17 und 18 wiederum sechs bzw. zwei Gestänge 32 notwendig sind.

Eine gewisse Elastizität des Riemens 24 erlaubt dabei eine Lenkbewegung des Rades 12 und damit zwangsläufig auch der Antriebsriemenscheibe 23 gegenüber der Orientierung der Antriebsriemenscheibe 25. Der bei dieser Ausführungsform maximal notwendige Lenkwinkelbereich von +/-45° ist dabei unproblematisch zu erreichen. Fig. 5 zeigt das Rad 12 und die Antriebsriemenscheibe 23 in durchgezogenen Linien in einer Winkelposition und gestrichelten Linien in einer dazu unter 45° liegenden weiteren Winkelposition.

Eine leistungsfähigere Variante des Antriebs und der Lenkung erfindungsgemäßer Rollen zeigen die Fig. 6 und 7. Dabei verfügt die nunmehr mit 33 bezeichnete Rolle über einen eigenen, individuell ansteuerbaren Antriebsmotor 34, der wiederum ein drehzahlgeregelter Elektromotor ist. Die Antriebsachse ist mit 35 bezeichnet. Über eine Haltekonstruktion 36 ist der Antriebsmotor 34 dabei an einer Abtriebsachse 37 eines Lenkantriebsmotors 38 angebracht. Die Lenkachse ist mit 39 bezeichnet. Der Lenkantriebsmotor 38 ist wiederum mit einem Halter 40 an einem Querträger 41 befestigt.

Man erkennt, daß der Lenkmotor 38 das Rad 33 mit dem Antriebsmotor 34 um die Achse 39 schwenken kann, woraus sich eine Lenkung ergibt. Hierbei ist zu beachten, daß die Lenkachse 38 nicht durch das Zentrum des Rades 33 verläuft. Durch einen entsprechenden Winkelhalter in oder an der Abtriebsachse 37 des Lenkmotors 38 wäre dies jedoch problemlos zu erreichen. Es kann jedoch genauso gut die durch die Lenkbewegungen gegebene Beeinflussung der Transportgeschwindigkeit in der Ansteuerung des Antriebsmotors 34 berücksichtigt werden.

In jedem Fall sind zwischen den einzelnen Rollen 33 und ihrer jeweiligen Antriebs- und Lenkmechanik keine mechanischen Verbindungen mehr notwendig. Damit zeigt diese Ausführungsform eine besonders modulare Aufbauweise. Mit dieser Ausführungsform können steuerungstechnisch beliebige Gruppen gebildet werden bzw. komplizierte Bewegungsformen auch durch individuelle Ansteuerungen einzelner Rollen 33 realisiert werden. Damit können besonders multifunktionale Transporttische 6 bzw. solche mit mathematisch optimierten Bewegungsmustern problemlos realisiert werden, weil sich die Bewegungsfolgen rein softwaretechnisch erzeugen lassen. Der Kostenaufwand ist jedoch etwas höher als bei der in den Fig. 3 - 5 dargestellten Variante.

Bei allen Ausführungsformen zeichnet sich die Erfindung dadurch aus, daß sich mit nur einer Arbeitshöhe und geringer Geräuschentwicklung bei Verwendung bekannter und technisch beherrschbarer Einzelelemente sehr flexible und leistungsfähige Transporttische realisieren lassen. Dabei können auch Pulkverbände von Platten zusammenhängend gefahren werden oder durch Beschleunigen oder Verzögern bzw. Anhalten oder Zurückfahren einzelner Platten auch vereinzelt oder umsortiert werden. Im Prinzip sind auch Plattenstapel transportierbar, wobei wegen der besseren Zugänglichkeit für Qualitätskontrollen und Ausschleusvorgänge ein Einzelplattentransport (bezüglich der Höhe) bevorzugt ist. Außerdem ergeben sich bei der Einzelplattenverarbeitung in den Trennaggregaten bessere Schnittqualitäten. Der Plattentransport ist äußerst schonend und prinzipiell schlupffrei realisierbar, womit auch empfindliche Oberflächen unbeschädigt bleiben.

## Patentansprüche

1. Transporttisch (6) für Platten, auf dem Platten transportiert werden können,
wobei der Transporttisch (6) eine Mehrzahl Rollen (12, 33) aufweist, entlang denen die Platten beim Transport abrollen
und die zum Antrieb der Platten antreibbar
und in einer jeweiligen Lenkachse (39, 42), die zu der Transportebene im wesentlichen senkrecht verläuft, lenkbar sind.

2. Transporttisch nach Anspruch 1, bei dem die Platten beim Transport über die Rollen (12, 33) abrollen und die Rollen (12, 33) die Platten beim Transport tragen und antreiben.

3. Transporttisch Anspruch 1 oder 2, der in einer einzigen Transportebene arbeitet und bei dem während einer Bewegungsrichtungsänderung der Platten auf dem Transporttisch keine Bewegungen der Platten senkrecht zu der Transportebene auftreten.

4. Transporttisch nach einem der vorstehenden Ansprüche, bei dem die Lenkbewegung der Rollen aktiv ansteuerbar (31, 32, 38) ist.

5. Transporttisch nach Anspruch 4, bei dem die Mehrzahl Rollen (12) in Gruppen (13-18) jeweils benachbarter Rollen unterteilt ist und die Rollen (12) innerhalb der Gruppen (13-18) gemeinsam angetrieben und/oder gelenkt werden können.

6. Transporttisch nach Anspruch 5, bei dem die Rollen (12) in einer Gruppe (13-18) durch ein gemeinsames Lenkgetriebe (31-32) gemeinsam gelenkt und durch eine gemeinsame Antriebseinrichtung (26) angetrieben werden.

7. Transporttisch nach Anspruch 6, bei dem die Rollen (12) über einen jeweiligen Antriebsriemen (24) mit der Antriebseinrichtung (26) verbunden sind, wobei die Umlenkachsen des Antriebsriemens an der Antriebseinrichtung (26) und an der jeweiligen Rolle (12) im wesentlichen in Richtung der Lenkachse (42) der jeweiligen Rolle (12) beabstandet sind.

8. Transporttisch nach einem der vorstehenden Ansprüche, zumindest Anspruch 4, dazu ausgelegt, daß die Rollen (12) beim Lenken nur zwischen festen Winkelpositionen (2, 8, 9) umgeschaltet werden.

9. Transporttisch nach einem der vorstehenden Ansprüche, bei dem die Mehrzahl Rollen (12) mit konstanter Geschwindigkeit angetrieben werden.

10. Transporttisch nach einem der vorstehenden Ansprüche als Weiche (6) zur Verteilung von zumindest einer Transportbahn (2, 3) einlaufender Platten auf zumindest zwei Auslauftransportbahnen (7, 11) oder umgekehrt.

11. Transporttisch nach einem der vorstehenden Ansprüche, der dazu ausgelegt ist, Platten in ihrer Orientierung in der Transportebene um senkrecht zu der Transportebene verlaufende Drehachsen zu drehen.

12. Transporttisch nach einem der vorstehenden Ansprüche als Winkelstation (6), die dazu ausgelegt ist, Platten in ihrer Transportrichtung (2, 8, 9) um einen Winkel zu verändern, und eine Steuerung aufweist, die so ausgelegt ist, daß die Platten im Transport durch die Winkelstation (6) ununterbrochen in Bewegung gehalten werden.

13. Transporttisch nach Anspruch 12, bei dem die Orientierung der Platten bei dem Transport durch die Winkelstation (6) unverändert bleiben kann.

14. Transporttisch nach Anspruch 12 oder 13, ausgelegt zum Transport von Platten, die in der Transportebene im wesentlichen rechteckig sind, und dazu, daß
bei Einlauf einer ersten Platte in einen Transportbereich (13-18) des Transporttisches in einer Einlaufbahn (13-16) liegende Rollen vor Ankunft der ersten Platte in die Einlaufrichtung (2) gelenkt sind,
nach Durchlaufen einer Kontrollposition (20) in dem Transportbereich (13-18) durch eine Referenzkante der ersten Platte die in der Einlaufbahn (13-16) liegenden und die außerhalb der ersten Platte und einer Auslaufrichtung der Winkelstation entsprechend vorderen Seitenkante der ersten Platte benachbarten Rollen (17-18) auf eine erste feste Winkelposition (8) umgelenkt werden,
und Rollen (12) in der Einlaufbahn in Gruppen (13-16) in die Einlaufrichtung (2) zurückgelenkt werden, und zwar zwischen Freigabe durch die erste Platte und Eintreffen einer Vorderkante einer nachfolgenden zweiten Platte.

15. Transporttisch nach Anspruch 14, bei dem nach Verlassen der Einlaufbahn (13-16) durch eine der Auslaufrichtung entsprechend hintere Seitenkante der ersten Platte die von der ersten Platte erfaßten Rollen (17, 18) und der vorderen Seitenkante der ersten Platte benachbarte, jedoch noch nicht von der ersten Platte erfaßte Rollen auf eine zweite feste Winkelposition (9) umgelenkt werden.

16. Transporttisch nach einem der vorstehenden Ansprüche, zumindest Anspruch 8 oder 14 oder 15, bei dem eine erste feste Winkelposition (8) unter 45° und eine zweite feste Winkelposition (9) unter 90° zu einer Einlaufrichtung (2) der Platten liegt.

17. Transporttisch nach einem der vorstehenden Ansprüche, bei dem die Rollen (33) über einen jeweils individuellen ansteuerbaren Antrieb (34) und eine jeweils individuell ansteuerbare Lenkung (38) verfügen.

18. Transporttisch nach Anspruch 17, bei dem die Rollen (33) auf einer zu der Transportebene im wesentlichen parallelen Abtriebsachse (35) eines jeweiligen Antriebsmotors (34) montiert sind und die Antriebsmotoren (34) auf einer zu der Transportebene im wesentlichen senkrechten Abtriebsachse (37) eines jeweiligen Lenkmotors (38) montiert sind.

19. Transporttisch nach einem der vorstehenden Ansprüche, der dazu ausgelegt ist, die Platten bei Drehungen und/oder Transportrichtungsänderungen für ausgedehnte Zeitperioden im wesentlichen konstanten Beschleunigungen auszusetzen.

20. Transporttisch nach einem der vorstehenden Ansprüche, zumindest Anspruch 9 und 12, dazu ausgelegt, die Platten mit im wesentlichen konstanter Geschwindigkeit entlang einer kreisbogenförmigen Transportbahn zu transportieren.
